# EUROPEAN PATENT APPLICATION

(11) **EP 2 466 317 A1**
(43) Date of publication of application: **20.06.2012**
(21) Application number: 10195638.1
(22) Date of filing: 17.12.2010
(51) Int. Cl.: G01P 1/12, G01P 1/16, G01P 15/04, G01P 15/135, H01H 1/00

(54) **Acceleration Threshold Detection**

(71) Applicant: NXP B.V., 5656 AG Eindhoven (NL)
(72) Inventor: Nguyen Hoang, Viet, Redhill, Surrey RH1 1DL (GB); Juffermans, Casper, Redhill, Surrey RH1 1DL (GB); Daamen, Roel, Redhill, Surrey RH1 1DL (GB); Bancken, Pascal, Redhill, Surrey RH1 1DL (GB)
(74) Representative: Williamson, Paul Lewis

(57) **Abstract**

A device and method implement a non-volatile acceleration memory (NVAM) concept. The device is able to memorize an event of acceleration that exceeds a predefined value. The device can be activated at the point of use. This eliminates faulty reporting due to manufacturing processes and handling of the sensor before the point of sale.

## Description

This invention relates to the detection of an acceleration threshold, for example to determine if an impact is the cause of damage to a device.

Product warranty is an important part of after sale service and is required by law in most countries. A warranty agreement usually covers only the damages that occur within a fixed period of time and under normal operating conditions. However, it is not always easy to determine whether a product was damaged under normal usage or if it has been abused.

This means product manufacturers or service providers may have to service products that have faults that should not have been within the scope of the warranty agreement. This results in financial losses for them as well as reduced service quality, such as speed.

Fragile products such as fresh fruit, glassware and sensitive electronic equipment needs to be handled with great care. There is a need to continuously monitor the transportation and preservation processes for these products to identify and eliminate potential causes for product damage.

A common cause for product damage is abrupt and excessive acceleration. For example, an object being dropped from a great height can cause a very large and sudden acceleration that damages products.

Shock sensors have been developed and tested. Conventionally, these sensors are based on detection of damage of an element that is sensitive to acceleration. The mechanical strength and weight of such an element will determine the threshold at which the element is damaged by abrupt acceleration.

One important disadvantage of shock sensors based on mechanical damage of a sensitive element is that the damage is permanent. During the manufacturing process as well as handling of the sensor, damage can happen resulting in unreliable reporting from the sensor.

According to the invention, there is provided a device for detection and storage of an acceleration event, comprising:
a memory cell comprising a charge storage electrode for setting the memory cell to a first state;
an acceleration sensor for detecting an acceleration threshold, and coupled to the charge storage electrode, thereby to change a state of the memory cell in response to the acceleration threshold being passed.

The invention provides what can be considered to be a non-volatile acceleration memory. A memory entry is made in response to a detected acceleration. The device is able to memorize an acceleration event that exceeds a predefined value.

The use of a rewritable memory cell means the device can be activated at the point of use. This eliminates any faulty reporting due to manufacturing process steps and handling of the device.

This device can be used in appliances where the history of acceleration that the appliance has experienced is of importance.

One example application is to give information on whether a damaged appliance falls within the warranty coverage or if it has been abused beyond the agreed norms such as falling from an excessive height.

The device of the invention can also be used to monitor the transport and preservation process of fragile products such as fresh fruit or glass/ceramic wares or sensitive electronics equipment to indentify and to improve on the possibly damaging process steps.

The memory cell can comprise a floating gate transistor, and the charge storage electrode then comprises the floating gate. This can be a standard flash memory cell design.

The acceleration sensor preferably comprises a suspended beam which is adapted to deflect in response to an external acceleration force, and a fixed contact with which the beam makes contact in response to the acceleration reaching the threshold, wherein the suspended beam is electrically connected to the charge storage electrode. In this way, the charge state of the charge storage electrode is changed in response to the acceleration event, for example the charge storage electrode is discharged. This provides the change in the memory cell state, for example the contact electrode can be grounded.

The acceleration sensor can comprise a layered structure of metal layers and dielectric layers, and interconnects between the metal layers, wherein a movable beam is formed from one metal layer and a contact electrode is formed from a metal layer beneath, with a cavity in the dielectric beneath the beam. This structure can be formed by a CMOS process.

Alternatively, the acceleration sensor can comprise a MEMS device. Again, a contact is made in response to the acceleration threshold, which causes the charge on the charge storage electrode to be changed.

The invention also provides an acceleration monitoring circuit comprising a plurality of devices of the invention, each having a different acceleration threshold. This means that a maximum acceleration reached (between discrete levels) can be determined.

The invention also provides a method for detecting and storing an acceleration event, comprising:
setting a memory cell to a first state by controlling the charge stored on a charge storage electrode;
detecting an acceleration threshold, and changing a state of the memory cell in response to the acceleration threshold being passed.

The setting of the memory preferably cell takes place at the point of sale of the device incorporating the memory cell, or when the device is first used by the user, i.e. after the manufacture of the device incorporating the memory cell is complete. This means it is sensitive to events which arise only when the device is in the possession of the user.

An example of the invention will now be described in detail with reference to the accompanying drawings, in which:
Figure 1 shows a device of the invention;
Figure 2 shows an intermediate stage of one way to form the acceleration threshold sensor used in the device of the invention;
Figure 3 shows an acceleration threshold sensor used in the device of the invention; and
Figure 4 shows the method of the invention.

The invention provides a device and method implementing a non-volatile acceleration memory (NVAM) concept. The device is able to memorize an event of acceleration that exceeds a predefined value. The device can be activated at the point of use. This eliminates faulty reporting due to manufacturing processes and handling of the sensor before the point of sale.

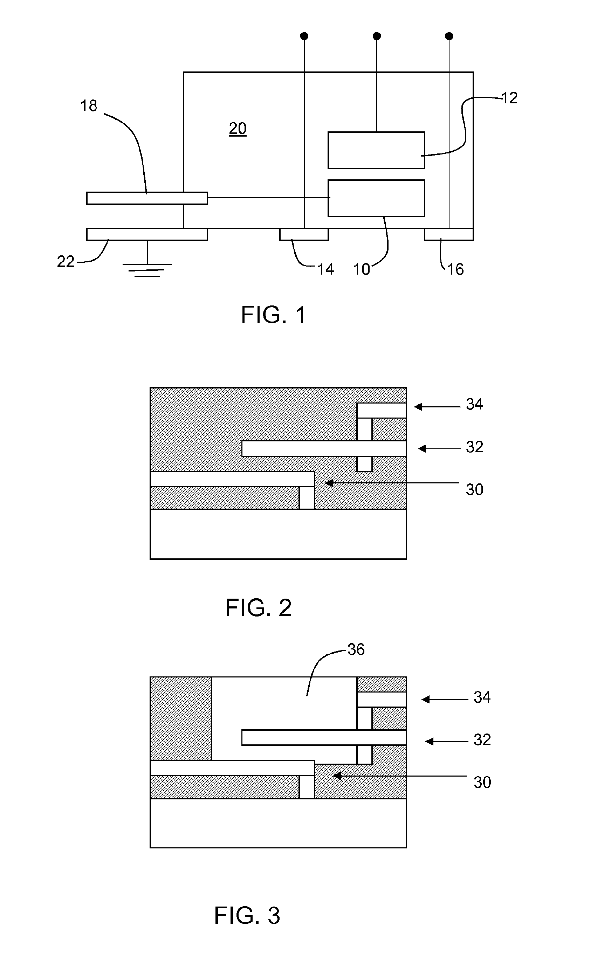

Figure 1 shows a schematic diagram of one example of non-volatile acceleration memory in accordance with the invention.

The device comprises a floating (charge storage) electrode 10, a control electrode 12 and a transistor with source 14 and drain 16. These components define a memory cell. This memory cell structure is equivalent to a conventional non-volatile memory cell, which can be manufactured using well known techniques.

A standard non voltage flash memory cell comprises a field effect transistor in which the transistor has two gates instead of one. On top is the control gate, as in other MOS transistors, but below this there is a floating gate insulated all around by an oxide layer. The floating gate is interposed between the control gate and the FET channel. Because the floating gate is electrically isolated by its insulating layer, any electrons placed on it are trapped there and, under normal conditions, will not discharge for many years.

When the floating gate holds a charge, it screens the electric field from the control gate, which modifies the threshold voltage (VT) of the cell. During read-out, a voltage intermediate between the possible threshold voltages is applied to the control gate, and the FET channel will become conducting or remain insulating, depending on the threshold voltage of the cell, which is in turn controlled by the charge on the floating gate.

In this way, the current flow through the FET channel can be sensed to extract the stored data.

The control electrode in proximity of the floating electrode is thus used to deliver charges into the floating electrode to set the cell and to perform cell readout. The cell can be reset be re-injecting charge to the floating electrode.

The floating electrode 10 is connected to a cantilever beam 18. This is able to deflect in response to external forces, in the same way as a conventional cantilever-type accelerometer.

The moving cantilever 18 can be produced either on a silicon substrate using MEMS (micro-electro-mechanical systems) processing, or it can be formed from the interconnect layers of a chip having metal interconnects embedded in a dielectric (such as a CMOS process).

Etching away the dielectric 20 surrounding a metal beam will create a free standing beam which can move as a result of acceleration.

The size, material and design of the cantilever are determined by the acceleration threshold beyond which the cantilever makes contact with an underlying stationary electrode 22. This contact causes the charge from the floating electrode to be discharged to ground and as a result the threshold voltage of the transistor changes..

This discharge of the floating electrode causes the event to be registered by the memory cell.

Figure 2 shows in more detail how to make a cantilever using the interconnect layers of an integrated circuit.

Three metal layers 30,32,34 are shown. The lower layer 30 is connected to ground. The middle layer 32 defines the beam, and the dielectric between the beam and the ground layer is removed as shown in Figure 3. The top metal layer 34 connects to the floating electrode of the memory cell. Vias are used to make the required connections between layers.

The floating electrode needs to be well isolated to avoid charge loss. The requirement for charge retention is similar to that of a non-volatile memory, for example 10 years at 85°C. This requirement can be however reduced to the service length intended for the device.

The floating electrode makes electrical contact with the movable cantilever tip. The cantilever should therefore also be very well electrically isolated to avoid discharge of the cell over time.

The cantilever is designed to make electrical contact with the stationary electrode under large acceleration. The contact however should be broken if the acceleration is removed. In other words, sticking between the cantilever and the stationary electrode is to be avoided.

After the device is fabricated, at the point of use, a voltage is applied to the control electrode 12 to pump/attract charges into the floating electrode. Because of the isolation, charges will stay in this electrode and influence the threshold voltage of the transistor.

The state of the memory cell is therefore set. The floating electrode thus functions as a charge storage element, and can keep the charge for extended period of time under static conditions (longer than the warranty period required by law, preferably for more than 5 years).

From that point, the device is activated. Upon experiencing acceleration beyond the threshold that the cantilever was designed for, the cantilever will make contact with the stationary electrode, leaking the charges away from the floating electrode, hence flip the state of the memory. This can be detected by electrical measurement.

One end of the cantilever can move under acceleration and make electrical contact with the stationary electrode that is connected to a much larger charge storage body, preferably to ground. The other end of the cantilever should be anchored.

The advantages of this device are:
- the acceleration event is easily detectable by electrical analysis of the device.
- it can be set at the point of use, so that previous acceleration events, such as during manufacture, are not triggered.
- it can be reset for multiple uses, so that if the device is repaired (even if the repair is not covered by the warranty as a result of the triggering of the sensor), the sensor can be reset.

By fabricating multiple acceleration sensor cells in a circuit, in which different cantilever designs are designed for different acceleration thresholds, the device can report a maximum experienced acceleration value.

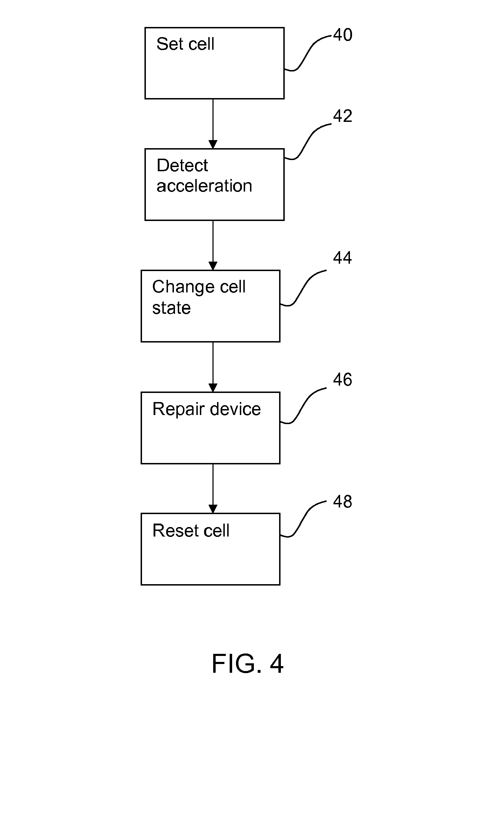

Figure 4 shows the method of the invention, for detecting and storing of an acceleration event.

In step 40, the memory cell is set to a first state. This can take place after the manufacture of the device incorporating the memory cell is complete, so that the acceleration sensor will only report events while the device is in the custody of the end user.

In step 42, the acceleration threshold is detected. This causes a changing of the state of the memory cell, in step 44.

If the device is damaged and is taken for repair (step 46), the memory cell state is measured. The change in state may for example take the repair out of the warranty.

After the repair, the memory cell is reset (step 48) to the first state.

The device and method of the invention can be used in appliances where the history of acceleration that the appliance experienced is of importance. One example application is to give the information on whether a damaged appliance falls within warranty coverage or if it has been abused beyond the agreed norms i.e. falling from excessive height.

Examples of device are portable electronics equipment such as mobile telephones, game consoles, cameras etc.

The device can also be used to monitor the transportation and preservation process of fragile products such as fresh fruit or glass/ceramic wares or sensitive electronics equipment to identify and eliminate potential causes for product damage.

In the example above, a flash type memory cell is described. The invention applies generally to any non-volatile memory technology (so that the memory cell remains in a long term persistent storage state) and which is re-settable (so that the device can be repaired and the memory cell reset). For example, a magneto-resistive memory cell may be employed.

In the example above, the memory cell loses charge when the acceleration threshold is reached. However, the charge flow can be in the opposite sense, so that charge is pumped into the floating electrode when the acceleration threshold is sensed. For example, the fixed electrode 22 can be a supply voltage line rather than a ground line.

A tandem architecture can be used, where two memory cells are provided, one of which is charged and the other is not. Upon detection of acceleration, the charge is redistributed between the floating gates of the cells and therefore both cells flip their state. In this case, there will be more than one memory cell in the circuit.

The acceleration sensor can be of any suitable design. The important point is that it links to the memory cell to cause a change in state. The advantage of a cantilever beam design is that it can be integrated into an IC, it can provide a simple one bit signal output (contact made or not), and it can easily be coupled to the memory cell in a compact way.

However, other acceleration sensors could be used, such as piezoelectric, piezoresistive or capacitive sensors for converting the mechanical force into an electrical signal. Piezoresistive accelerometers are well known for use in high shock applications.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

## Claims

1. A device for detection and storage of an acceleration event, comprising:
a memory cell (10,12,14,16) comprising a charge storage electrode (10) for setting the memory cell to a first state;
an acceleration sensor (18) for detecting an acceleration threshold, and coupled to the charge storage electrode (10), thereby to change a state of the memory cell in response to the acceleration threshold being passed.

2. A device as claimed in claim 1, wherein the memory cell comprises a floating gate transistor (10,12,14,16), wherein the charge storage electrode (10) comprises the floating gate.

3. A device as claimed in claim 2, wherein the acceleration sensor comprises a suspended beam (18) which is adapted to deflect in response to an external acceleration force, and a fixed contact (22) with which the beam makes contact in response to the acceleration reaching the threshold, wherein the suspended beam (18) is electrically connected to the charge storage electrode.

4. A device as claimed in any preceding claim, wherein the acceleration sensor comprises a layered structure of metal layers (30,32,34) and dielectric layers, and interconnects between the metal layers, wherein a movable beam (18) is formed from one metal layer (32) and a contact electrode (30) is formed from a metal layer beneath, with a cavity in the dielectric beneath the beam.

5. A device as claimed in claim 4, wherein the contact electrode (30) is grounded.

6. A device as claimed in any one of claims 1 to 3, wherein the acceleration sensor comprises a MEMS device.

7. An acceleration monitoring circuit comprising a plurality of devices as claimed in any preceding claim, each having a different acceleration threshold.

8. A method for detecting and storing of an acceleration event, comprising:
setting a memory cell (10,12,14,16) to a first state by controlling the charge stored on a charge storage electrode (10);
detecting an acceleration threshold, and changing a state of the memory cell (10,12,14,16) in response to the acceleration threshold being passed.

9. A method as claimed in claim 8, wherein the memory cell comprises a floating gate transistor, and the charge storage device comprises the floating gate (10).

10. A method as claimed in claim 9, wherein detecting an acceleration threshold comprises deflecting a suspended beam (18) in response to an external acceleration force, wherein the beam makes contact with a fixed contact (22) in response to the acceleration reaching the threshold, wherein the suspended beam (18) is electrically connected to the charge storage electrode such that the memory cells is switched to a second state.

11. A method as claimed in any one of claims 8 to 10 comprising detecting and storing a plurality an acceleration events using different memory cells, each having a different acceleration threshold.

12. A method as claimed in any one of claims 8 to 11, wherein the setting of the memory cell takes place after the manufacture of the device incorporating the memory cell is complete.

13. A method as claimed in any one of claims 8 to 12, further comprising resetting the memory cell to the first state after repair of the device incorporating the memory cell.
